**Europäisches Patentamt**

**European Patent Office**

**Office européen des brevets**

(19)

(11) Veröffentlichungsnummer: **0 092 651**
**B1**

(12) # EUROPÄISCHE PATENTSCHRIFT

(45) Veröffentlichungstag der Patentschrift:
21.09.88

(51) Int. Cl.⁴: **G 01 B 21/02**

(21) Anmeldenummer: **83101350.3**

(22) Anmeldetag: **12.02.83**

(54) Gekapselte Messeinrichtung.

(30) Priorität: **24.04.82 DE 3215334**

(43) Veröffentlichungstag der Anmeldung:
**02.11.83 Patentblatt 83/44**

(45) Bekanntmachung des Hinweises auf die Patenterteilung:
**21.09.88 Patentblatt 88/38**

(84) Benannte Vertragsstaaten:
**AT CH FR GB IT LI NL SE**

(56) Entgegenhaltungen:
**DE-B-2 846 768**
**FR-A-2 406 767**
**US-A-3 404 487**
**US-A-4 214 930**

**DESIGN ENGINEERING, Januar 1982 Seiten 37-44,**
**LONDON (GB) R. ROBINSON: "The brush as a seal".**

(73) Patentinhaber: **Dr. Johannes Heidenhain GmbH,**
**Nansenstrasse 17, D-8225 Traunreut (DE)**

(72) Erfinder: **Reichl, Alfred, Sonntagshornstrasse 10,**
**D-8221 Stein (DE)**

## Beschreibung

Die Erfindung betrifft eine gekapselte Meßeinrichtung, insbesondere eine inkrementale oder absolute Längen- oder Winkelmeßeinrichtung, gemäß dem Oberbegriff des Anspruchs.

Die Druckschrift DESIGN ENGINEERING "The brush as a seal" von R. Robinson, Januar 1982, Seiten 37 - 44 beschreibt Abdeckmittel für einen Schlitz eines Schiebereglers und für eine Welle in Form von Faserbündeln.

Der US-A-3 404 487 entnimmt man Dichtstreifen in Form dicht gebündelter Fasern, die an einer Seite eine dünne flexible Schicht zur Abdichtung von Türen gegen Witterungseinflüsse aufweisen.

Die US-A-4 214 930 offenbart Dichtstreifen in Form von Faserbündeln, die auf beiden Seiten einer flexiblen Dichtlippe zur Abdichtung von Spalten zwischen zwei relativ zueinander beweglichen Elementen bei Türen und Fenstern gegen Witterungseinflüsse angeordnet sind.

Die FR-A-2 406 767 beschreibt eine Einrichtung zum staubdichten Verschließen eines Spaltes in einem Gehäuse, durch den ein schwertförmiger Mitnehmer zum Verschieben eines Wagens im Innern des Gehäuses hindurchgreift. Der Spalt wird mittels zweier dachförmig angeordneter Filzstreifen abgedichtet, die den Mitnehmer zwischen sich aufnehmen.

Die DE-B-2 846 768 zeigt eine gekapselte Längenmeßeinrichtung, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Bei der vorgenannten Meßeinrichtung müssen die Dichtlippen zur möglichst hermetischen Abschirmung des Gehäuses eng am Mitnehmer anliegen und daher elastisch mit hoher Rückstellkraft ausgebildet sein. Infolge der durch die hohen Rückstellkräfte auftretenden Reibungskräfte am Mitnehmer bei der Meßbewegung kann der Mitnehmer Deformationen in Meßrichtung erfahren, die der Meßgenauigkeit abträglich sind. Die Aufbiegung der Dichtlippen durch den Mitnehmer hat Tordierungen der Dichtlippen in Längserstreckung des Schlitzes zur Folge, so daß auch bei günstiger schwertförmiger Querschnittsausbildung des Mitnehmers kleine, von den Dichtlippen nicht verschlossene Bereiche an den Enden des Mitnehmers unvermeidlich sind.

Der Erfindung liegt die Aufgabe zugrunde, bei einer Meßeinrichtung der oben genannten Gattung Dichtstreifen für einen Gehäuseschlitz anzugeben, die ohne Beeinträchtigung der Meßgenauigkeit infolge von Krafteinwirkungen auf den Mitnehmer eine weitgehend hermetische Abschirmung des Gehäuses erlauben.

Diese Aufgabe wird erfindungsgemäß durch die kennzeichnenden Merkmale des Anspruchs gelöst.

Die mit der Erfindung erzielten Vorteile bestehen insbesondere darin, daß die Faserbündel nur äußerst geringe Reibungskräfte auf den Mitnehmer bei der Meßbewegung ausüben und somit durch Verformungen des Mitnehmers bedingte Meßfehler nicht mehr auftreten können. Da die einzelnen Fasern der Faserbündel weitgehend unabhängig voneinander sind, wirken sich die Aufbiegungen der Faserbündel im Bereich des Mitnehmers nicht auf die Bereiche außerhalb des Mitnehmers aus, so daß sich keine unverschlossenen Bereiche an den Enden des Mitnehmers in Meßrichtung mehr ausbilden. Zudem besitzen die Faserbündel mit elastischer Rückstellkraft neben ihrer Abdeckungsfunktion auch eine Trägerfunktion für die dünne Folie; da die dünne Folie keine eigene Rückstellkraft aufzubringen vermag, wird die Rückstellung durch die Faserbündel bewirkt. Man erhält somit einen Dichtstreifen der herkömmlichen Art, jedoch ohne dessen Nachteile. Da in der dünnen Folie keine Tordierungen mehr auftreten, wird eine weitgehend hermetische Abdichtung im Bereich des Mitnehmers erzielt, so daß der vorgeschlagene Dichtstreifen vielseitig einsetzbar ist.

Ausführungsbeispiele der Erfindung werden anhand der Zeichnung näher erläutert.

Es zeigen

Figur 1a, b einen Querschnitt und eine Ansicht einer gekapselten Längenmeßeinrichtung,

Figur 2a, b vergrößerte Ausschnitte mit einer ersten Ausbildung von Dichtstreifen und

Figur 3a, b vergrößerte Ausschnitte mit einer zweiten Ausbildung von Dichtstreifen.

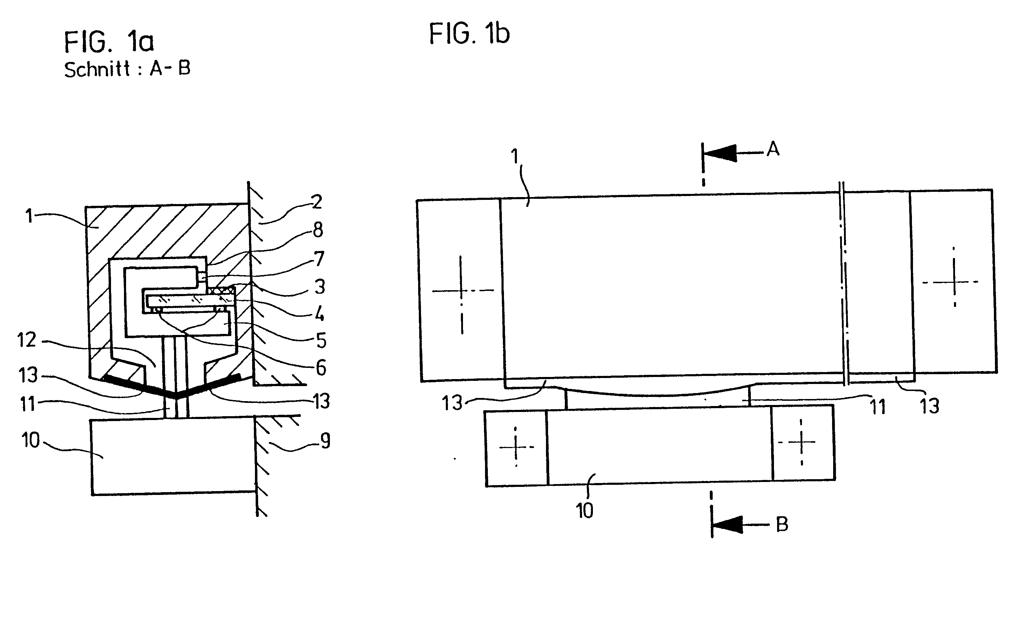

Gemäß Figur 1a, b ist ein Gehäuse 1 in Form eines Hohlprofils einer inkrementalen Längenmeßeinrichtung in beliebiger Weise an einem Bett 2 einer nicht dargestellten Bearbeitungsmaschine befestigt. An einer Innenfläche des Gehäuses 1 ist mittels einer Klebeschicht 3 ein Maßstab 4 angebracht, dessen Teilung von einer Abtasteinheit 5 abgetastet wird, die in nicht gezeigter Weise eine Abtastplatte, eine Beleuchtungseinrichtung und Photoelemente aufweist. Die Abtasteinheit 5 stützt sich mittels Rollen 6 auf dem Maßstab 5 und mittels Rollen 7 an einer Führungsfläche 8 des Gehäuses 1 ab, die die Hilfsführung für die Abtasteinheit 5 bilden. An einem Schlitten 9 der Bearbeitungsmaschine ist in beliebiger Weise ein Montagefuß 10 mit einem Mitnehmer 11 befestigt, der durch einen Schlitz 12 in das Innere des Gehäuses 1 hineinragt und mit der Abtasteinheit 5 zur Messung der Relativlage zwischen dem Bett 2 und dem Schlitten 9 verbunden ist. Zur Vermeidung des Eindringens von Verunreinigungen in das Innere des ansonsten völlig geschlossenen Gehäuses 1 ist der Schlitz 12 durch zwei dachförmig angeordnete Dichtstreifen 13 verschlossen, durch die der Schwertförmig ausgebildete Mitnehmer 11 hindurchgreift.

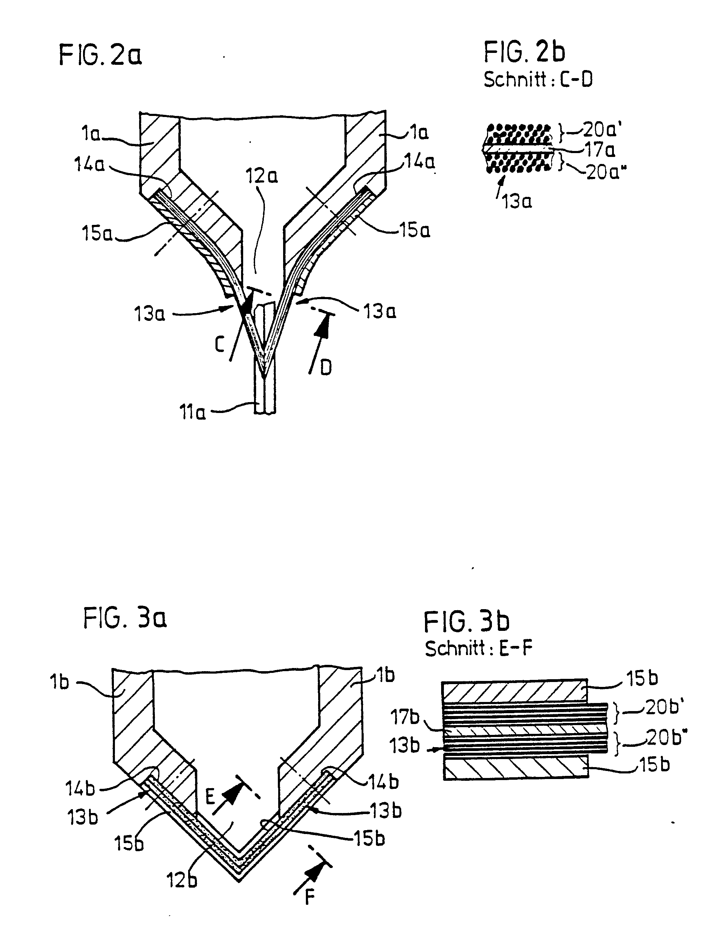

Erfindungsgemäße Ausbildungen der in Figur 1 schematisch dargestellten Dichtstreifen 13 sind vergrößert in den Figuren 2a, 2b und 3a, 3b gezeigt.

In Figur 2a ist der Schlitz 12a eines Gehäuses 1a mittels zweier Dichtstreifen 13a abgedichtet, die jeweils aus einem inneren Faserbündel 20a' und aus einem äußeren Faserbündel 20a'' bestehen, zwischen denen sich eine dünne Folie 17a aus Kunststoff als Dichtelement befindet (Figur 2b). Die Dichtstreifen 13a sind an dem Schlitz 12a benachbarten konkav gekrümmten Außenflächen 14a mittels entsprechend gekrümmten Formteile 15a durch Klemmung befestigt, so daß die quer zur Längserstreckung des Schlitzes 12a verlaufenden Fasern 20a', 20a'' mit ihren freien Enden und die Folien 17a mit ihren freien Randflächen dachförmig unter einem Spitzen Winkel aneinander anliegen, durch die ein Mitnehmer 11a hindurchgreift. Die mit ihren Randflächen dicht aneinander und am Mitnehmer 11a anliegenden Folien 17a gewährleisten eine nahezu hermetische Dichtung, bei der auf den Mitnehmer 11a keine nennenswerten Kräfte einwirken, so daß dadurch bedingte Meßfehler ausgeschaltet sind. Die inneren Faserbündel 20a' und die äußeren Faserbündel 20a'' bestehen aus unterschiedlichen Materialien mit elastischer Rückstellkraft.

In Figur 3a ist der Schlitz 12b eines Gehäuses 1b mittels zweier im Querschnitt dachförmig verlaufender Dichtstreifen 13b abgedichtet, durch die ein Mitnehmer hindurchgreift. Die Dichtstreifen 13b bestehen jeweils aus einer dünnen Folie 17b aus Kunststoff, die auf beiden Seiten mit einem inneren Faserbündel 20b' und mit einem äußeren Faserbündel 20b'', die in Längsrichtung des Schlitzes 12b verlaufen, durch Kleben verbunden ist (Figur 3b) ; die Dichtstreifen 13b sind an ihren Enden zwischen je zwei V-förmigen Formteilen 15b geklemmt, die jeweils an den beiden Enden des Gehäuses 1b in beliebiger Weise quer zur Längserstreckung des Schlitzes 12b an dem Schlitz 12b benachbarten Außenflächen 14b des Gehäuses 1b befestigt sind. Da die dünnen Folien 17b unter einem Winkel aneinanderstoßen, erlauben die Dichtstreifen 13b eine nahezu hermetische Abdichtung. Die inneren Faserbündel 20b' und die äußeren Faserbündel 20b'' bestehen aus unterschiedlichen Materialien mit elastischer Rückstellkraft. Da die Fasern 20 aus einem Material mit weitgehend bleibender elastischer Rückstellkraft bestehen, wie es beispielsweise bei Kunststoffasern und Naturfasern der Fall ist, liegen die Fasern 20 der beiden Dichtstreifen 13 stets dicht aneinander und an beiden Seiten des Mitnehmers 11 an. Trotz dieser dichten Anlage üben die gebündelten Fasern 20 nur äußerst geringe Reibungskräfte auf den Mitnehmer 11 bei der Meßbewegung aus, so daß durch Verformungen des Mitnehmers 11 bedingte Meßfehler nicht mehr auftreten. Da die einzelnen Fasern 20 der Dichtstreifen 13 weitgehend unabhängig voneinander sind, wirken sich die Aufbiegungen der Fasern 20 im Bereich de Mitnehmers 11 nicht auf die Bereiche außerhalb de Mitnehmers 11 aus, so daß sich keine unverschlossenen Bereiche an den Enden des Mitnehmers 11 in Meßrichtung ausbilden.

Neben ihrer Abdeckungsfunktion üben die gebündelten Fasern 20 mit elastischer Rückstellkraft eine Trägerfunktion für die dünne Folie 17 ohne elastische Rückstellkraft aus.

Ein äußeres Faserbündel 20a'', 20b'' aus Glasfasern oder Metallfasern ist besonders vorteilhaft, wenn die Gefahr des Einwirkens glühender Metallspäne besteht. Das Metallfaserbündel 20a'', 20b'' bewirkt gleichzeitig eine Abschirmung gegen elektromagnetische Störeinflüsse auf die Meßeinrichtung. Die Dichtstreifen können aus einer beliebigen Kombination der oben bevorzugt genannten Fasermaterialien oder anderen Materialien bestehen.

Die Erfindung ist nicht auf gekapselte photoelektrische Meßeinrichtungen beschränkt, sondern auch bei gekapselten optischen, magnetischen, induktiven und kapazitiven Meßeinrichtungen einsetzbar. Bei gekapselten optischen Meßeinrichtungen, insbesondere Interferometern, ist der Mitnehmer beispielsweise gemäß der DE-PS 2 421 371 mit einem Reflektor des Interferometers und gemäß der DE-PS 2 425 066 mit einem Reflektor des Interferometers und mit einem Spiegel eines Autokollimator-Meßsystems verbunden.

**Patentanspruch**

Gekapselte Meßeinrichtung, insbesondere inkrementale oder absolute Längen- oder Winkelmeßeinrichtung, zur Messung der Relativlage zweier zueinander beweglicher Objekte (2, 9), deren mit einem der zu messenden Objekte (2) verbundenes Gehäuse (1) an zumindest einer Seite einen in Bewegungsrichtung des beweglichen Objekts (2) verlaufenden Schlitz (12) aufweist, durch den ein mit dem anderen Objekt (9) verbundener Mitnehmer (11) in das Innere des Gehäuses (1) hineinragt, der seinerseits mit einer im Gehäuse (1) untergebrachten, zur Messung dienenden Baueinheit (5) verbunden ist, wobei der Schlitz (12) mittels zweier biegsamer, aneinanderstoßender Dichtstreifen (13a'; 13b) durchgehend abgedichtet ist, durch die der Mitnehmer (11) hindurchgreift, dadurch gekennzeichnet, daß jeder Dichtstreifen (13) eine dünne Folie (17a; 17b) als Dichtelement aufweist, die in einem Träger in Form eines inneren und äußeren Faserbündels (20a', 20a''; 20b', 20b'') aus einem Material mit elastischer Rückstellkraft eingeschlossen ist und daß die die Folie (17a; 17b) einschließenden inneren und äußeren Faserbündel (20a', 20a''; 20b', 20b'') aus
Unterschiedlichem Material bestehen.

## Claim

Encapsulated measuring arrangement, especially an incremental or absolute length or angle measuring arrangement, for measuring the relative position of two objects (2, 9) movable relative to one another, whereof a housing (1) connected to one of the objects to be mesured (2) has a slot (12) on at least one side running in the direction of movement of the movable object, through which a carrier (11) connected to the other object (9) projects into the interior of the housing (1), which carrier is for its part connected to a unit (5) fitted in the housing (1) and serving for the measurement, therein the slot.(12) is seated throughout by means of two yielding, mutually abutting sealing strips (13a; 13b), through which the carrier (11) engages, characterized in that each sealing strip (13) has a thin foil (17a; 17b) as sealing element, which is sheathed in a carrier in the form of an inner and outer fibre bundle (20a', 20a''; 20b', 20b'') of a material with elastic restoring force, and in that the inner and outer fibre bundles (20a', 20a''; 20b', 20b'') sheathing the foil (17a; 17b) consist of different materials.

## Revendication

Dispositif de mesure étanche sous boîtier, en particulier dispositif de mesure incrémentale ou absolue de longueurs ou d'angles, pour la mesure de la position relative de deux objets (2, 9) se déplaçant l'un par rapport à l'autre, dont le boîtier (1) relié à l'un des objets à mesurer (2) présente, sur au moins un côté, une fente (12) qui s'étend dans la direction de déplacement de l'objet mobile (2) et par laquelle un entraîneur (11) relié à l'autre objet (9) pénètre à l'intérieur du boîter (1) et est, de son côté, relié à un module (5) logé dans le boîtier (1) et servant à la mesure, la fente (12) étant rendue étanche de bout en bout à l'aide de deux bandes flexibles d'étanchéité (13a; 13b) contiguës entre lesquelles passe l'entraîneur (11), caractérisé en ce que chaque bande d'étanchéité (13a; 13b) présente comme élément d'étanchéité une feuille mince (17a; 17b) qui est enfermée dans un support se présentant sous la forme d'un faisceau intérieur (20a'; 20b') et d'un faisceau extérieur (20a''; 20b'') de fibres constitués d'un matériau présentant une force de rappel élastique et en ce que les faisceaux intérieurs et extérieurs de fibres (20a', 20a''; 20b', 20b'') enfermant la feuille (17a; 17b) entre eux sont constitués de matériaux différents.

**0 092 651**

FIG. 1b

FIG. 1a
Schnitt : A - B

# FIG. 2a

# FIG. 2b
Schnitt : C-D

# FIG. 3a

# FIG. 3b
Schnitt : E-F